# EUROPEAN PATENT SPECIFICATION

(11) **EP 2 190 915 B1**
(45) Date of publication and mention of the grant of the patent: **23.01.2013**
(21) Application number: 08799088.3
(22) Date of filing: 03.09.2008
(51) Int. Cl.: C08K 5/53, C08J 9/00

(54) **EXPANDED STYRENIC POLYMERS CONTAINING AROMATIC PHOSPHONATE FR ADDITIVES**
EXPANDIERTE STYROLPOLYMERE, ENTHALTEND AROMATISCHE PHOSPHONATE ALS FR-ADDITIVE
POLYMÈRES STYRÉNIQUES EXPANSÉS CONTENANT DES ADDITIFS IGNIFUGEANTS PHOSPHONATES AROMATIQUES

(30) Priority: 13.09.2007 US 993595 P
(43) Date of publication of application: 02.06.2010
(73) Proprietor: Dow Global Technologies LLC, Midland, MI 48674 (US)
(72) Inventor: WILSON, David, R., Midland MI 48640 (US); ROMER, Duane, Ronald, Midland MI 48642 (US); KRUPER, William, John, Sanford MI 48657 (US); SHANKAR, Ravi, B., Midland MI 48642 (US); STOBBY, William, Gerald, Midland MI 48640 (US); WORKU, Anteneh, Z., Pearland TX 77584 (US)
(74) Representative: Raynor, John
(86) International application number: PCT/US2008/075081
(87) International publication number: WO 2009/035880

(56) References cited:
- WO-A-00/12593
- WO-A-2006/027241
- US-A- 4 036 809
- US-A- 4 255 324
- US-A- 4 268 459

## Description

The present invention relates to flame and smoke retardant additives for expanded styrenic polymers.

Flame suppressant additives are commonly added to polymer products used in construction applications. Many types of materials have been used as FR additives in various types of polymer systems. The selection of a particular FR additive for a specific polymer system often depends on the polymer that is used, as well as the physical form which the polymer assumes. FR additives that work well with some polymers often do not perform adequately when used in other polymer systems.

Similarly, FR additives that work well in non-expanded polymer systems often do not provide the needed flame retardancy properties when tried in expanded polymer systems. In part, this is because solid and expanded polymers burn in different ways. The mechanisms by which particular flame retardants work can vary, and in some instances those mechanisms are effective in solid polymers, but not in expanded polymers. For example, some FR additives work in solid polymer systems by promoting char formation at the surface that is exposed to the flame. The char creates a barrier that prevents the underlying polymer from supplying additional fuel for the flame, and the flame, deprived of fuel, then becomes extinguished. Because of the high surface area and low density of expanded polymers, they do not char easily and therefore this strategy is usually not effective. In addition, expanded polymers have very high surface areas at which the flame front can find fuel. This often creates greater demands on an FR additive.

Various phosphorus compounds have been used as FR additives. These include organic phosphates, phosphonates and phosphoramides, some of which are described in U. S. Patent Nos. 4,070,336, 4,086,205, 4,255,324, 4,268,459 and 4,278,588, and NL 8004920.

Among the phosphorus compounds that have been evaluated are certain bis(cyclic phosphonate) compounds corresponding to the structure : 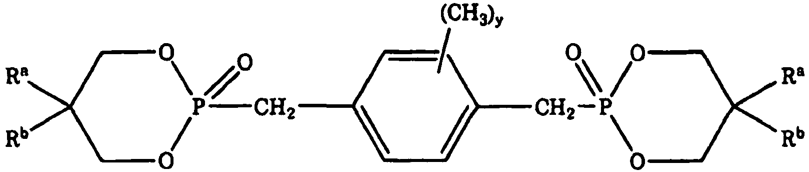 wherein each R^{a} is hydrogen or methyl, R^{b} is hydrogen, methyl or ethyl, y is an integer from 0 to 2, and the phosphonate groups are attached to methylene groups that are in the para position with respect to each other. U. S. Patent No. 4,268,459 reports that these compounds were evaluated as FR additives in noncellular polypropylene and poly(ethylene terephthalate). According to this patent, polypropylene containing 15% by weight of a compound of this type are self-extinguishing when evaluated according to ASTM D-635. The patent further reports that adding 10% by weight of these compounds to poly(ethylene terephthalate) increases its limiting oxygen index (LOI) from 19.4 to 23.7-24.0.

However, similar results have not been reported when those bis(cyclic phosphonate) compounds have been evaluated in other polymers. For example, NL 8004920 reports the evaluation of the same compounds in a noncellular 50/50 blend of polyphenylene oxide and an impact-modified polystyrene. According to NL 8004920, incorporation of 4-6% of the bis(cyclic phosphonate) compound into this blend provides a material that is rated "free-burning" when tested per UL-94 Vertical Test Method 3.10-3.15. Therefore, the efficacy of the bis(cyclic phosphonate) compounds appears to depend on the particular polymer system under investigation, even when the polymer is not expanded in each case.

The flame retardant properties of other phosphorus compounds also appear to depend on the organic polymer system in which they are used. For example, in U. S. Patent No. 4,278,588, certain phosphine oxide compounds are reported to impart a V-O or V-1 rating (according to the UL-94 test) at levels of 4-6 weight-% in noncellular polyphenylene oxide/impact-modified polystyrene blends. However, that patent reports that levels as high as 20 weight-% are ineffective when blended into the impact-modified polystyrene by itself (i.e., without the polyphenylene oxide).

WO/2006/027241 relates to halogen-free, flame-retarded polymer foams, in particular, polystyrol particulate foams made from expanded polystyrene (EPS) or extruded polystyrene foam sheets (XPS), containing a phosphorous compound as flame-retarding agent of general formula (I): 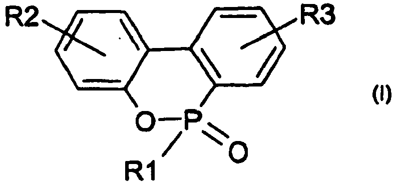 where R₁, R₂ and R₃ independently = H, substituted or non-substituted C₁-C₁₅ alkyl, substituted or non-substituted C₁-C₁₅ alkenyl, substituted or non-substituted C₃-C₈ cycloalkyl, substituted or non-substituted C₆-C₁₈ aryl or substituted or non-substituted C₇-C₃₀ alkylaryl, or the product from hydrolysis or a metal salt of a phosphorus compound of general formula (I) and a method for production thereof.

Brominated compounds such as hexabromocyclododecane are commonly used as flame retardant (FR) additives in expanded styrenic polymers such as extruded polystyrene foam. Hexabromocyclododecane increases the limiting oxygen index of the expanded styrenic polymer, allowing the expanded polymer to pass standard fire tests. Because hexabromocyclododecane is under regulatory and public pressure that may lead to restrictions on its use, there is an incentive to find a replacement for it.

It is desirable to provide an alternative FR additive for expanded styrenic polymers. The FR additive should be capable of raising the LOI of the expanded styrenic polymer when incorporated into the polymer at reasonably low levels. Similarly, the FR additive should be capable of conferring good fire extinguishing properties to the polymer system, again when present at reasonably small levels.

Because in many cases the FR additive is most conveniently added to a melt of the styrenic polymer, or else (or in addition) is present in subsequent melt-processing operations, the FR additive should be thermally stable at the temperature at which the molten polymer is processed, which is often 220°C or higher. The FR additive should be compatible enough in the styrenic polymer to remain distributed uniformly in the polymer phase. The FR additive should not affect the physical and rheological properties of the expanded polymer excessively, at the levels at which the FR additive is used. In addition, the FR additive should not adversely affect the foaming process, such as by causing excessive cell nucleation or polymer plasticization. It is also preferable that the FR additive has low toxicity.

The present invention is in one aspect an expanded polymer composition having a density of from 1 to 30 lb/ft³ (16-480 kg/m³), comprising at least one styrenic polymer and from 2 to 6% by weight, based on the weight of the expanded polymer composition, of one or more aromatic polyphosphonate compounds corresponding to the following structure I: 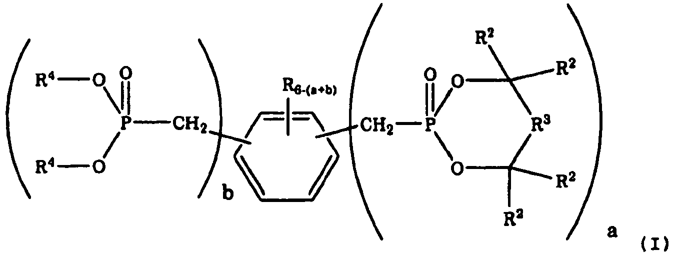 wherein a and b are each from 0 to 6, with a + b being from 2 to 6; each R is independently hydrogen, unsubstituted alkyl having up to 6 carbon atoms, or alkyl having up to 6 carbon atoms and substituted by an ether group, ester group, carbonyl group, hydroxyl group, carboxylic acid group, oxirane group, primary, secondary or tertiary amine group, imine group, amide group, nitro group, silane group or siloxane group, -NO₂, -NR¹₂ ,-C≡N, -OR¹, -C(O)OR¹, or -C(O)NR¹₂ (wherein R¹ is hydrocarbyl or hydrogen);
each R² is independently hydrogen, alkyl or alkyl substituted by an ether group, ester group, carbonyl group, hydroxyl group, carboxylic acid group, oxirane group, primary, secondary or tertiary amine group, imine group, amide group, nitro group, silane group or siloxane group;
each R³ is a covalent bond or a divalent linking group; and
each R⁴ is independently an alkyl, aryl, alkyl substituted by an ether group, ester group, carbonyl group, hydroxyl group, carboxylic acid group, oxirane group, primary, secondary or tertiary amine group, imine group, amide group, nitro group, silane group or siloxane group or aryl groupsubstituted by an ether group, ester group, carbonyl group, hydroxyl group, carboxylic acid group, oxirane group, primary, secondary or tertiary amine group, imine group, amide group, nitro group, silane group or siloxane group.

The invention is in another respect a method for making an expanded styrenic polymer, comprising forming a pressurized, molten mixture of a melt-processable, styrenic polymer containing at least one blowing agent and from 2 to 6% by weight of the aromatic polyphosphonate compound of structure I, and extruding the molten mixture through a die to a region of reduced pressure such that the molten mixture expands and the styrenic polymer cools to form a solid expanded polymer.

The aromatic polyphosphonate additives described herein have been found to be unexpectedly effective FR additives for expanded styrenic polymers, as indicated by certain standardized tests. The aromatic polyphosphonate additives also have been found to have little deleterious effect on foam processing. The FR additives are particularly useful in preparing extruded styrenic polymer foams, in which extrusion temperatures reach 220°C or more. The FR additives tend to have good thermal stability at temperatures in excess of 220°C or even in excess of 250°C.

The FR additives that are the subject of this invention are aromatic polyphosphonates that have the structure I: 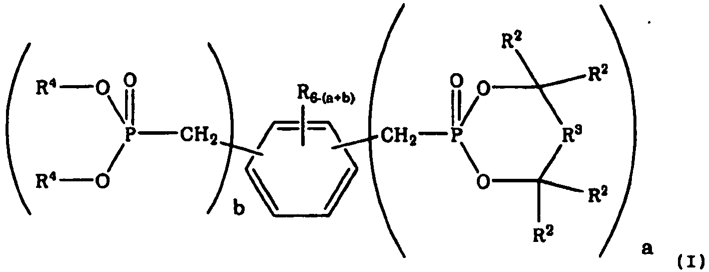 wherein a, b, R, R², R³ and R⁴ are as defined before.

In embodiments in which b is zero, the aromatic polyphosphonate is represented by structure II 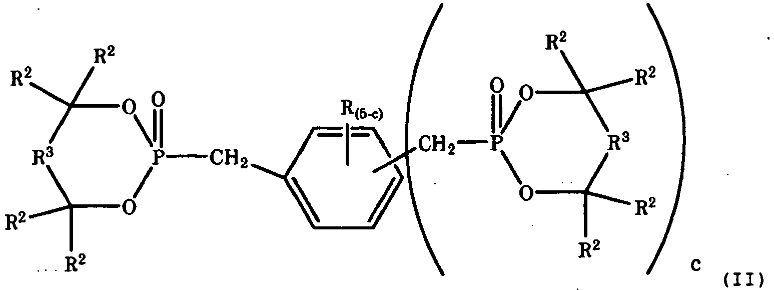 wherein c is 1 to 5 and R, R² and R³ are as defined before. c is preferably from 1 to 3 and is most preferably 1. When c is 1, the aromatic polyphosphonate is represented by structure III as follows: 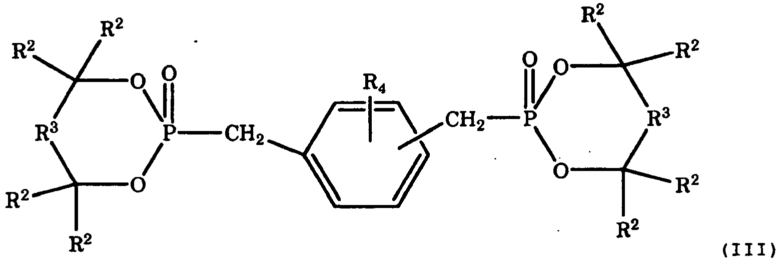 wherein R, R² and R³ are as before. In structure III, the methylene phosphonate groups may be para, meta or ortho to each other.

In each of structures I-III, each R is preferably hydrogen or unsubstituted alkyl having up to 4 carbon atoms. Each R is most preferably hydrogen. Each R² is preferably hydrogen, and each R³ is preferably an alkylene diradical having no hydrogens on the carbon atom(s) bonded directly to the adjacent (R²)₂C groups. R³ is more preferably dialkyl-substituted methylene and most preferably dimethylmethylene (propylidene).

More preferred FR agents include those having structures IV and V:

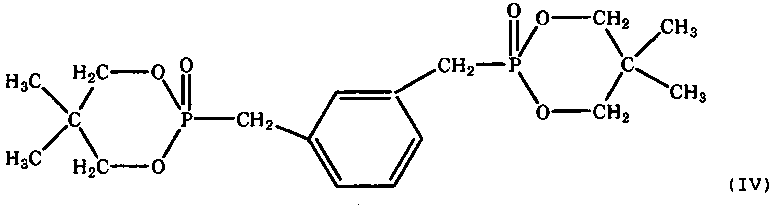

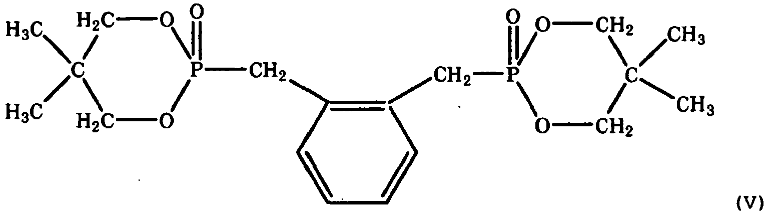

In embodiments in which a in structure I is zero, the aromatic polyphosphonate is represented by structure VI: 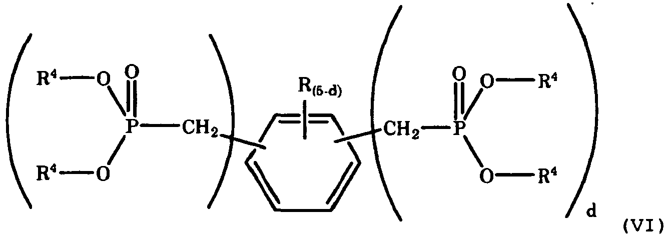 wherein d is from 1 to 5 and R and R⁴ are as defined before. d is preferably from 1 to 3 and is most preferably 1. When d is one, the aromatic polyphosphonate is represented by structure VII as follows: 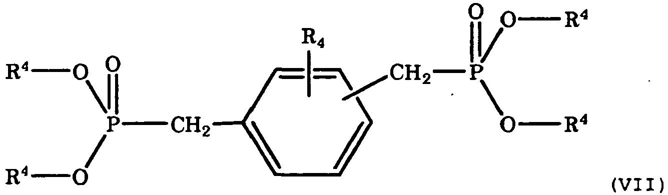 wherein R and R⁴ are as defined before. In structure VII, the methylene phosphonate groups may be para, meta or ortho to each other.

In structures VI and VII, R is preferably hydrogen or unsubstituted alkyl having up to 4 carbon atoms, and is most preferably hydrogen. In structures I, VI and VII, R⁴ is preferably C₁-C₄ alkyl, phenyl or benzyl.

The term "inertly substituted", when used herein in connection with the FR additives, means that the substituent group is one that does not undesirably interfere with the flame retardant properties of the compound or undesirably reduce its 5% weight loss temperature. The inert substituent may be, for example, an oxygen-containing group such as an ether, ester, carbonyl, hydroxyl, carboxylic acid, oxirane group. The inert substituent may be, for example, a nitrogen-containing group such as a primary, secondary or tertiary amine group, an imine group, amide group, or a nitro group. The inert substituent may contain other hetero atoms such as sulfur, phosphorus, silicon (such as silane or siloxane groups). The inert substituent is not a halogen.

The FR additives can be prepared in a various ways, including those described in U. S. Patent No. 4,268,459. A convenient way is to react an alkyl ester of the corresponding cyclic phosphite with a halomethyl-substituted benzene compound. This reaction is sometimes referred to as an "Arbuzov" reaction, and is described, for example, in C.A. 47, 9900 et seq. Such reactions are shown schematically in structures VIII and IX: 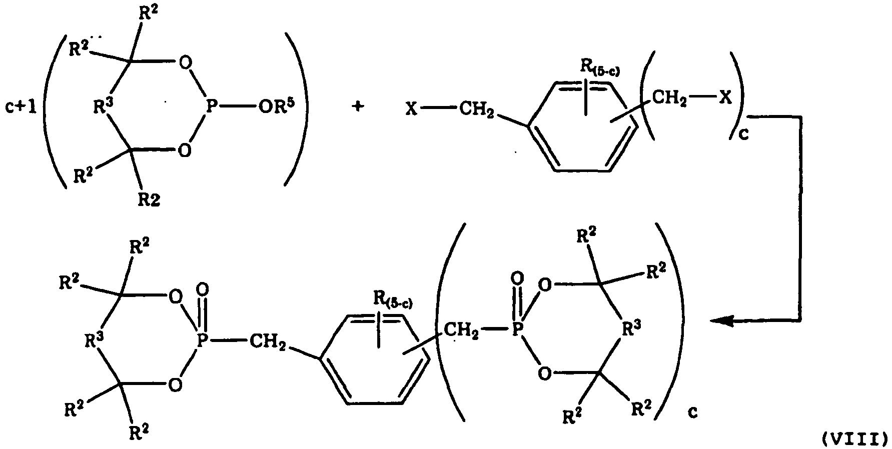 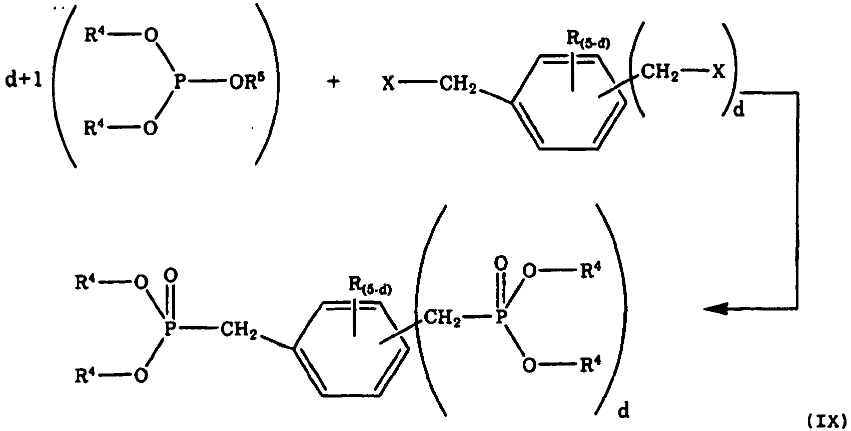 wherein c, d, R, R², R³ and R⁴ are as described before, R⁵ is an alkyl group which is preferably methyl, ethyl or isopropyl, and each X is a halogen, preferably chlorine or bromine. In the reactions illustrated in structures VIII and IX, the halomethyl-substituted benzene compound is preferably a 1,4-bis(halomethyl)benzene, a 1,3-bis(halomethyl) benzene, a 1,2-bis(halomethyl) benzene or a 1,4 bis(halomethyl)-2,5-dimethylbenzene.

The cyclic phosphite starting materials that are used in the reaction, shown in structure VIII can be prepared by reacting PCl₃ with a diol (such as 1,3-propylene glycol or, preferably, neopentyl glycol) and an alcohol corresponding to R⁵OH. This manner of preparing the starting material is described by McConnell et al., J. Org. Chem. Vol. 24, pp. 630-635 (1959), as well as in U. S. Patent No. 4,268,459.

An alternative route to making the FR additives of the invention is by first reacting a trialkyl phosphite with a halomethyl-substituted benzene compound to form an intermediate ester, and then reacting the intermediate ester with, on one hand, a diol (such as 1,3-propylene glycol or, preferably, neopentyl glycol) to form cyclic phosphonate groups, and/or, a monoalcohol of the form R⁴OH to form non-cyclic phosphonate groups. Again, the halomethyl-substituted benzene compound is preferably 1,4-bis(halomethyl)benzene, 1,3-bis(halomethyl) benzene, 1,2-bis(halomethyl) benzene or 1,4 bis(halomethyl)-2,5-dimethylbenzene. Such a reaction scheme is described with respect to forming cyclic phosphonate groups, in U. S. Patent No. 4,268,459.

A third route involves forming an ester of phosphonic acid, reacting the ester with an alkali metal hydride to form the corresponding alkali metal salt (preferably sodium or potassium salt), and then reacting the resulting alkali metal salt with the halomethyl-substituted benzene compound. As before, the bis(halomethyl)-substituted benzene compound is preferably 1,4-bis(halomethyl)benzene, 1,3-bis(halomethyl), benzene, 1,2-bis(halomethyl) benzene or 1,4 bis(halomethyl)-2,5-dimethylbenzene. This reaction scheme is described with respect to forming cyclic phosphonate groups, in U. S. Patent No. 4,268,459.

The aromatic polyphosphonates are useful as flame retardant additives for an expanded styrenic polymer. A styrenic polymer is, for purposes of this invention, a homopolymer or copolymer of styrene or a substituted styrene monomer If substituted, the styrene monomer may be substituted on the ethylenically unsaturated group (such as, for example alpha-methylstyrene), and/or be ring-substituted. Ring-substituted styrene monomers include those having halogen, alkoxyl, nitro or unsubstituted or substituted alkyl groups bonded directly to a carbon atom of the aromatic ring. Examples of such ring-substituted styrene monomers include 2- or 4-bromostyrene, 2- or 4-chlorostyrene, 2- or 4-methoxystyrene, 2- or 4-nitrostyrene, 2- or 4-methylstyrene and 2,4-dimethylstyrene. Preferred styrene polymers are polymers of styrene, alpha-methyl styrene, 4-methyl styrene, and mixtures thereof.

In addition to homopolymers of any of the foregoing monomers and copolymers of two or more thereof, the styrene polymers of interest include copolymers of styrene or other styrene monomer and one or more comonomers, which may be styrenic or non-styrenic monomers. Also included are blends of a styrenic polymer and another polymer. Examples of such copolymers include styrene-acrylonitrile polymers, styrene-acrylonitrile-butadiene (ABS) resins, rubber-modified polystyrene polymers such as high impact polystyrene (HIPS) and random, block or graft copolymers of butadiene and at least one styrenic monomer. Copolymers and blends should contain at least 25 weight percent of polymerized styrenic monomer units, such as repeating units having the structure X 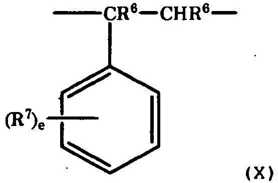 wherein each R⁶ is independently hydrogen, halogen or lower alkyl, each R⁷ is independently halogen, alkoxyl, nitro or unsubstituted or substituted alkyl group, and e is from 0 to 5. Copolymers and blends preferably contain from 25 to 100% by weight of polymerized styrenic monomer units, preferably from 35 to 99% by weight thereof. Certain copolymers and blends may contain from 35 to 95% by weight polymerized styrenic monomer units, or from 35 to 60% by weight of polymerized styrenic monomer units.

The expanded styrenic polymer suitably has a foam density of from 1 to 30 pounds per cubic foot (pcf) (16-480 kg/m³), especially from 1.2 to 10 pcf (19.2 to 160 kg/m³) and most preferably from 1.2 to 4 pcf (19.2 to 64 kg/m³). The expanded polymer can be made via any suitable process, including extrusion foaming processes, reactive foaming processes and expanded bead processes. The FR additives of the invention often are suitable for manufacturing extruded foams, because the compounds in many cases have sufficient thermal stability, as indicated by the 5% weight loss temperature test described below, to be introduced into the foam extrusion process by which the foam is made. Extruded polystyrene foam and expanded polystyrene bead foam are especially preferred expanded polymers.

Enough of the FR additive is used to improve the performance of the expanded polymer in one or more standard fire tests. One such test is a limiting oxygen index (LOI) test, which evaluates the minimum oxygen content in the atmosphere that is needed to support combustion of the polymer. LOI is conveniently determined in accordance with ASTM D 2863. The expanded polymer containing the FR additive of the invention preferably has an LOI at least 2 percentage points, more preferably at least 3 percentage points, higher than that of the expanded polymer in the absence of an FR additive. The LOI of the expanded styrenic polymer-FR additive mixture is preferably at least 20%, more preferably at least 23% and even more preferably at least 25%. Another fire test is a time-to-extinguish measurement, known as FP-7, which is determined according to the method described by A. R. Ingram in J. Appl. Poly. Sci. 1964, 8, 2485-2495. This test measures the time required for flames to become extinguished when a polymer sample is exposed to an igniting flame under specified conditions, and the ignition source is then removed. In general, FP-7 values should be as low as possible. For a polystyrene polymer containing the FR additive described herein, an FP-7 value of less than 10 seconds, preferably less than 5 seconds, even more preferably less than 2 seconds, is desired. Generally, these results can be obtained when the phosphorus FR additive constitutes from 2 to 6 weight percent of the compounded combustible polymer.

It is convenient in many cases to blend the FR additive into the styrenic polymer, either prior to or during another melt processing operation (such as extrusion, foaming, molding, etc.). Because of this, the FR additive is preferably thermally stable at the temperature at which the styrenic polymer is melt-processed. This temperature is typically 200°C or higher and preferably 220°C or higher.

A useful indicator of thermal stability is a 5% weight loss temperature, which is measured by thermogravimetric analysis (TGA) as follows: ∼10 milligrams of the FR additive is analyzed using a TA Instruments model Hi-Res TGA 2950 or equivalent device, with a 60 milliliters per minute (mL/min) flow of gaseous nitrogen and a heating rate of 10°C/min over a range of from room temperature (nominally 25°C) to 600°C. The mass lost by the sample is monitored during the heating step, and the temperature at which the sample has lost 5% of its initial weight is designated the 5% weight loss temperature (5% WLT). This method provides a temperature at which a sample undergoes a cumulative weight loss of 5 weight-%, based on initial sample weight. The FR additive preferably exhibits a 5% WLT of at least the temperature at which the combustible polymer is to be melt-processed (to blend it with the FR additive or to process the blend into an article such as a foam, extruded part, molded part, or the like). The FR additive should have a 5% WLT of at least 200°C, preferably at least 220°C, more preferably at least 240°C, and still more preferably at least 250°C.

It is also possible to blend the FR additive with the styrenic polymer using other methods, such as mixing it into a,solution of the polymer, by adding it into a suspension polymerization or emulsion polymerization process, or in other ways.

Expanded styrenic polymers in accordance with the invention may include other additives such as other flame retardant additives, thermal stabilizers, ultraviolet light stabilizers, nucleating agents, antioxidants, foaming agents, acid scavengers and coloring agents.

A highly preferred process for making the expanded styrenic polymer composition is through a foam extrusion process. In this process, a pressurized, molten mixture of a melt-processable, styrenic polymer, at least one blowing agent and from 1 to 20% by weight of the aromatic polyphosphonate compound is formed, and the molten mixture is extruded through a die to a region of reduced pressure such that the molten mixture expands and the styrenic polymer simultaneously cools and hardens to form an expanded polymer. The aromatic polyphosphonate compound can have any of structures I-VII above. It can be added to the styrenic polymer in several ways, such as by adding it to the melted polymer in the extruder, by adding it to the polymer in an earlier step, or by blending it into a masterbatch with a small quantity of the styrenic polymer (or another polymer, in the case of blends). Such a masterbatch can be dry-blended with the styrene polymer and the blend fed to the extrusion equipment. Alternatively, the masterbatch can be introduced separately into the extrusion equipment, and blended with the molten styrenic polymer as part of the extrusion process. During the extrusion process, the temperature of the molten mixture containing the styrenic polymer and the aromatic polyphosphonate compound will typically reach at least 220°C and may reach a temperature of 250°C or higher.

The molten mixture can be extruded in sheet foam (i.e., having a thickness of ¼ inch (6.35) mm or less), can be extruded into plank or board foam (i.e., having a thickness of greater than ¼ inch (6.35 mm), preferably at least one inch (2.5 cm), and typically up to as much as 12 inches (30 cm)). The molten mixture can be extruded through multiple orifices to form strands, which are then brought together and coalesce to form strand board type foams. The molten mixture can also be extruded into various other shapes, such as rods and the like.

The blowing agent used to make the expanded styrenic polymer may include hydrocarbons such as carbon dioxide, water and normally liquid physical blowing agents having a boiling temperature (at one atmosphere of pressure) of no greater than 100°C, preferably no greater than 70°C and more preferably from 30°C to 60°C. Examples of such normally liquid physical blowing agents include low-boiling hydrocarbons, hydrofluorocarbons, hydrochlorofluorocarbons, fluorocarbons, dialkyl ethers or fluorine-substituted dialkyl ethers, or a mixture of two or more thereof. Blowing agents of these types include, for example, propane, n-butane, isobutane, isobutene, cyclobutane, isopentane, n-pentane, neo-pentane, cyclopentane, dimethyl ether, 1,1-dichloro-1-fluoroethane (HCFC-141b), chlorodifluoromethane (HCFC-22), 1-chloro-1,1-difluoroethane (HCFC-142b), 1,1,1,2-tetrafluoroethane (HFC-134a), 1,1,1,3,3-pentafluorobutane (HFC-365mfc), 1,1-difluoroethane (HFC-152a), 1,1,1,2,3,3,3-heptafluoropropane (HFC-227ea) 1,1,1,3,3-pentafluoropropane (HFC-245fa), methanol, ethanol, propanol, isopropanol. Normally liquid physical blowing agents are typically used in amounts from 0.2 to 1.5 moles of blowing agent per kilogram of polymer.

The following examples are provided to illustrate the invention, but not to limit the scope thereof. All parts and percentages are by weight unless otherwise indicated.

### Preparation Example 1

(Neopentyl)isopropylphosphite (20.110 g, 104.6 mmol), α,α'-dibromo-m-xylene (13.152 g, 49.83 mmol) and 40 mL of xylene are combined in a Schlenk flask equipped with a distillation head which has a jacketed Vigreux column and a thermometer. The system is evacuated, placed under nitrogen, and the reaction flask is placed in a wax bath heated to 150°C. Within a few minutes, distillate begins to collect at a very rapid rate and a solid begins to form. The flask is removed from the bath and the distillate is returned to the reaction flask. The flask is replaced in the hot wax bath, so that just a few millimeters of flask are being heated. 2-Bromopropane distills off slowly. The bath is allowed to cool to ambient temperature. The solid mass which has formed is filtered, washed with 20 mL of xylene, washed with 20 mL of hexane and dried to give the product 2,2'-[1,3-phenylenebis(methylene)]bis[5,5-dimethyl-1,3,2-dioxaphosphorinane] 2,2'-dioxide as a mixture of powder and crystalline chunks. The yield is 11.781 g, 58.75%. Proton, ¹³C and ³¹P NMR spectra on the product exhibit the following features: ¹H NMR (299.99 MHz, CDCl₃, vs TMS) δ: 7.2 - 7.3 (m, 4H), 4.16 (d of d, 4H, J = 11.0 Hz, J = 7.8 Hz), 3.72 (d of d, 4H, J = 14.2 Hz, J = 11.2 Hz), 3.26 (d, 4H, J = 22.0 Hz), 0.96 (s, 6H), 0.86 (s, 6H).
¹³C NMR (75.44 MHz, CDCl₃, vs TMS) 8: 131.37 (t, J = 6.4 Hz), 131.25 (t, J = 6.4-Hz), 128.91 (t, J = 3.4 Hz), 128.69 (t. J = 5.0 Hz), 75.31 (inverted t, J = 3.4 Hz), 33.36, 32.49 (inverted t, J = 3.0 Hz), 31.57, 21.41, 21.31.
³¹P NMR (121.44 MHz, CDCl₃, vs H₃PO₄) 8: 22.18.

The NMR spectra are consistent with a product having the structure:

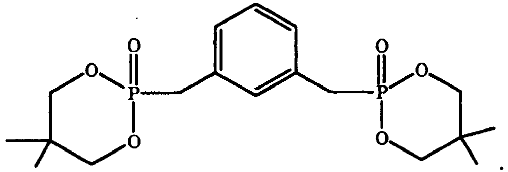

### Preparation Example 2

(Neopentyl)isopropylphosphite (23.50 g, 122.3 mmol), α,α'-dichloro-m-xylene (13.7 g, 78.28 mmol) and 20 mL of mesitylene are combined in a Schlenk flask equipped with a distillation head which has a jacketed Vigreux column and a thermometer. The system is evacuated, placed under nitrogen, and the reaction flask placed in a wax bath heated to 120°C. The temperature is gradually increased to 170°C and isopropylchloride begins to collect. The reaction mixture is heated at 170°C overnight. The temperature is then gradually increased to 200°C. No solid forms and no more distillate is collected. The reaction mixture is cooled to about 120°C and an additional 10.5 g of (neopentyl)isopropylphosphite (34.0 g, 177 mmol total) is added. The solution is heated quickly to 180°C, then gradually heated to 200°C and maintained at that temperature overnight. After overnight heating, solids still have not formed, so the reaction mixture is heated to 210°C for several more hours. The reaction mixture is allowed to cool to ambient temperature and the whole reaction mixture becomes filled with a colorless crystalline material. The solids are filtered, washed once with 40 mL of xylene and several times with hexane, and dried to give colorless granular crystalline product, 2,2'-[1,3-phenylenebis(methylene)]bis[5,5-dimethyl-1,3,2-dioxaphosphorinane] 2,2'-dioxide. The yield is 18.575 g.

### Preparation Example 3

(Neopentyl)isopropylphosphite (19.97 g, 103.9 mmol), α,α'-dibromo-o-xylene (13.07 g, 49.50 mmol) and 20 mL of xylene are combined in a Schlenk flask equipped with a distillation head which has a jacketed Vigreux column and a thermometer. The system is evacuated, placed under nitrogen, and the reaction flask is placed in a wax bath heated to 150°C. Within a few minutes, 2-bromopropane begins to distill off and solids begin to form. The bath is allowed to cool to ambient temperature overnight. The crystalline mass in the solvent is broken up, collected on a frit, washed with 20 mL of xylene and 20 mL of hexane, and dried under water aspirator vacuum to give the colorless crystalline product, 2,2'-[1,2-phenylenebis(methylene)]bis[5,5-dimethyl-1,3,2-dioxaphosphorinane] 2,2'-dioxide. The yield is 12.84 g, 64.5%. Proton, ¹³C and ³¹P NMR spectra on the product exhibit the following features:
¹H NMR (299.99 MHz, CDCl₃, vs TMS) δ: 7.26 - 7.31 (m, 2H), 7.19 - 7.23, 4.17 (d of d, 4H, J = 11.0 Hz, J = 6.6 Hz), 3.71 (d of d, 4H, J = 15.4 Hz, J = 11.2 Hz), 3.48 (d, 4H, J = 20.5 Hz), 0.92 (s, 6H), 0.82 (s, 6H).
¹³C NMR (75.44 MHz, CDCl₃, vs CDCl₃) δ: 131.42, 130.33, 127.37, 74.85 (t, J = 3.0 Hz), 32.34 (t, J = 2.7 Hz), 29.87 (d of d, J = 135.2 Hz, J = 1.7 Hz), 21.16, 21.06.
³¹P NMR (121.44 MHz, CDCl₃, vs H₃PO₄) δ: 23.16.

The NMR spectra are consistent with a product having the structure:

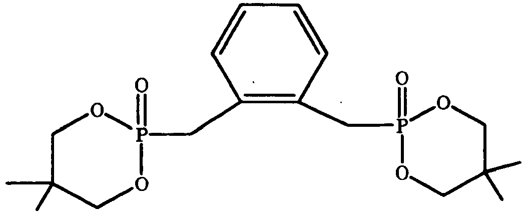

### Preparation Example 4

Neopentyl isopropylphosphite (219.5 g, 1.142 mol), α,α'-dichloro-o-xylene (90.88 g, 519.1 mmol), 150 mL of xylene and 150 mL of mesitylene are combined in a 1-L three-necked flask equipped with a mechanical stirrer and a distillation head which has a jacketed Vigreux column and a thermometer. The system is evacuated, placed under nitrogen, and the reaction flask is gradually heated to 185-190°C. The flask is held in that temperature range for about 16 hours, with formation of a white solid. The reaction temperature is then raised to about 200°C for about 4 hours. The reaction flask is allowed to cool to ambient temperature. The solids are collected on a frit, washed twice with 100 mL of toluene, twice with 100 mL of cyclohexane and twice with 100 mL of hexane, and dried under reduced pressure to give the colorless crystalline product, 2,2'-[1,2-phenylenebis(methylene)]bis[5,5-dimethyl-1,3,2-dioxaphosphorinane] 2,2'-dioxide. The yield is 135.08 g.

### Preparation Example 5

α,α'-Dichloromethyl-p-benzene (20.17 g, 115.2 mmol) is dissolved in 120 mL of cyclohexanone. Sodium bromide is added (74.94 g, 728.3 mmol). The flask is stirred while heating for about 3 hours under nitrogen in a wax bath at a temperature of about 130°C. On cooling, the reaction mixture solidifies. All of the solids are dissolved by alternately adding toluene and water. The aqueous layer is extracted three times with toluene. The combined organic fractions are washed twice with water, once with saturated aqueous NaCl solution, dried overnight over anhydrous MgSO₄, and filtered. The volatiles are removed on a rotary evaporator heated to about 60°C. Analysis by gas chromatography-mass spectroscopy (GC-MS) shows the major products to be 2-cyclohexylidenecyclohexanone, 1,4-bis(bromomethyl)-benzene, 2,6-bis(cyclohexylidene)cyclohexanone and 1-(bromomethyl)-4-(chloromethyl)benzene. The isolated mixture is dissolved in about 150 mL of methyl ethyl ketone and stirred at about 100°C with additional 75 g of sodium bromide for several hours. After cooling, the volatiles are stripped off on a rotary evaporator to give a brown oil. Hexane (200 mL) is added to precipitate the insolubles and the mixture is filtered. By GC-MS, the filtrate contains several components, mostly 2-cyclohexylidenecyclohexanone, but no 1,4-bis(bromomethyl)benzene. The solid material on the frit contains a very small amount of 1-(bromomethyl)-4-(chloromethyl)benzene, and nearly equal amounts of 1,4-bis(bromomethyl)benzene and a product with a parent ion at 414. The material is recrystallized in a freezer from hot toluene. The mother liquor then contains mostly 1,4-bis(bromomethyl)xylene with a smaller amount of 1-(bromomethyl)-4-(chloromethyl)benzene enriched from the starting material. The recrystallized product shows only the same two components, but the amount of 1-(bromomethyl)-4-(chloromethyl)benzene is reduced from before. Total yield of 1,4-bis(bromomethyl)benzene is 45.3%.

(Neopentyl)isopropylphosphite (19.71 g, 102.5 mmol), 1,4-bis(bromomethyl)benzene (13.20 g, 50.01 mmol) and 50 mL of xylene are combined in a Schlenk flask equipped with a distillation head which has a jacketed Vigreux column and a thermometer. The system is evacuated, placed under nitrogen, and the reaction flask is placed in a wax bath heated to 90°C. The temperature is gradually increased to 150°C. The 1,4-bis(bromomethyl)benzene dissolves by the time the temperature reaches 110C. When the temperature reaches about 115°C, a solid begins to form and isopropylbromide begins to distill. The bath temperature is held at 150°C for 4 hours, then gradually heated to 180°C for 5 hours. Heating at 180°C is continued over the course of several, days. After cooling, about 20 mL of toluene are added to the solid which forms. The product is filtered, washed with 50 ml of toluene, washed with 20 mL of hexane, and dried to give the product, 2,2'-[1,4-phenylenebis(methylene)]bis[5,5-dimethyl-1,3,2-dioxaphosphozinane] 2,2'-dioxide, as a colorless solid. The yield is 18.526 g, 92%.
Proton, ¹³C and ³¹P NMR spectra on the product exhibit the following features:
¹H NMR (299.99 MHz, CDCl₃, vs TMS) δ: 7.26 (s, 4H), 4.18 (d of d, 4H, J = 11.1 Hz, J = 6.7 Hz), 3.68 (d of d, 4H, J = 14.9 Hz, J = 11.2 Hz), 3.25 (d, 4H, J = 20.3 Hz), 0.93 (s, 6H), 0.84 (s, 6H).
¹³C NMR (75.44 MHz, CDCl₃, vs CDCl₃) 8: 130.10, 129.78, 75.05 (t, J = 3.0 Hz), 32.50 (t, J = 3.0 Hz), 32.29 (d, J = 136.8 Hz), 21.37, 21.35.
³¹P NMR (121.44 MHz, CDCl₃, vs H₃PO₄) 8: 22.74.

The NMR spectra are consistent with a product having the structure:

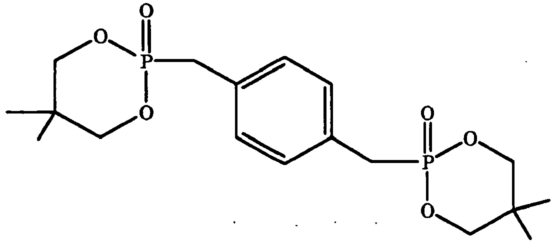

### Screening Example 1

2,2'-[1,3-Phenylenebis(methylene)]bis[5, 5-dimethyl-1,3,2-dioxaphosphorinane] 2,2'-dioxide is melt blended with a polystyrene resin at a 6/94 weight ratio. The solidified melt blend is ground using a Wiley lab grinder until it passes through a 3 millimeter (mm) screen. 25-27 g aliquots of the ground melt blend is compression molded into plaques measuring 100 mm x 100 mm x 1.5 mm using a Pasadena Hydraulic Platen Press (Model # BL444-C-6M2-DX2357) operating at a set point temperature of 180°C with a pressure application time of 5 minutes and an applied pressure of 25,000 pounds per square inch (psi) (172 MPa). The molded plaques are cut into strips for Limiting Oxygen Index (LOI) and FP-7 testing. LOI is evaluated according to ASTM D 2863, and is found to be 20.5%. The time to flame extinguishment is 5.8 seconds on the FP-7 test.

### Screening Example 2

Plaques are made in the same manner as described in Screening Example 1, using 2,2'-[1,4-phenylenebis(methylene)]bis[5,5-dimethyl-1,3,2-dioxaphosphorinane] 2,2'-dioxide and a polystyrene resin at a 3:97 weight ratio. The LOI is found to be 20.5%. The time to flame extinguishment is 15 seconds on the FP-7 test.

### Examples 1-4

Plaques are made in the general manner described in Screening Example 1, using 2,2'-[1,2-phenylenebis(methylene)]bis[5,5-dimethyl-1,3,2-dioxaphosphorinane] 2,2'-dioxide and polystyrene resin at a 3:97 weight ratio, and at a 6:94 weight ratio. The LOI for the plaques containing 3% of the additive is found to be 23.0%. The time to flame extinguishment is 5.1 seconds on the FP-7 test. For the sample containing 6% of the additive, the LOI is 22.5 and the time to flame extinguishment is 0.4 seconds on the FP-7 test.

A third plaque is made in similar manner, containing 6 weight-% of the 2,2'-[1,2-phenylenebis(methylene)]bis[5,5-dimethyl-1,3,2-dioxaphosphorinane] 2,2'-dioxide and 0.5% of dicumyl peroxide. In this case, the LOI is 24.5 and the time to flame extinguishment is 0.3 seconds on the FP-7 test.

A concentrate of 10 weight-%, based on concentrate weight, of 2,2'-[1,2-phenylenebis(methylene)]bis[5,5-dimethyl-1,3,2-dioxaphosphorinane] 2,2'-dioxide in polystyrene is prepared by blending the additive, polystyrene and a 2 weight-% of a powdered organotin carboxylate stabilizer (THERMCHEK™ 832, commercially available from Ferro Corporation), based on the weight of the blend. The blend is melt compounded with the polystyrene using a Haake RHEOCORD™ 90 twin screw extruder equipped with a stranding die. The extruder has three temperature zones operating at set point temperatures of 135°C, 170°C and 180°C and a die set point temperature of 180°C. The extruded strands are cooled in a water bath and cut into pellets approximately 5 mm in length. The pellets are converted into a foam using, in sequence, a 25 mm single screw extruder with three heating zones, a foaming agent mixing section, a cooler section and an adjustable 1.5 mm adjustable slit die. The three heating zones operate at set point temperatures of 115°C, 150°C and 180°C and the mixing zone operates at a set point temperature of 200°C. Carbon dioxide (4.5 parts by weight (pbw) per 100 pbw combined weight of the concentrate pellets and the additional polystyrene pellets) is fed into the foaming agent mixing section using two different RUSKA™ (Chandler Engineering Co.) syringe pumps. Concentrate pellets and pellets of additional polystyrene are dry blended together with 0.05 weight-%, based on dry blend weight, of barium stearate as a screw lubricant. The ratio of the concentrate pellets and pellets of additional polystyrene are selected to provide a final concentration of FR additive of 3% by weight. The dry blend is added to the extruder's feed hopper and fed at a rate of 2.3 kg/hr. Pressure in the mixing section is maintained above 1500 psi (10.4 MPa) to provide a polymer gel having uniform mixing and promote formation of a foam with a uniform cross-section. The coolers lower the foamable gel temperature to 120°C-130°C. The die opening is adjusted to maintain a die back pressure of at least 1000 psi (6.9 MPa). The foamable gel expands as it exits the die to form an expanded polystyrene foam (Example 1) having a bulk density of ∼2.48 pcf (39.7 kg/m³). The LOI for the foam is 22.8%, and the time to flame extinguishment is 5.4 seconds on the FP-7 test.

When a second foam (Example 2) is made in the same manner, but using 6 weight-% of 2,2'-[1,2-phenylenebis(methylene)]bis[5,5-dimethyl-1,3,2-dioxaphosphorinane] 2,2'-dioxide, LOI is 23.5 and the time to flame extinguishment is 5.2 seconds on the FP-7 test.

When a third foam (Example 3) is made in the same manner, but using 6 weight-% of 2,2'-[1,2-phenylenebis(methylene)]bis[5,5-dimethyl-1,3,2-dioxaphosphorinane] 2,2' dioxide plus 0.5 weight-% dicumyl peroxide, the LOI is 23.0 and the time to flame extinguishment is 6.7 seconds on the FP-7 test.

When a fourth foam (Example 4) is made in the same manner, using 3 weight-% of 2,2'-[1,2-phenylenebis(methylene)]bis[5,5-dimethyl-1,3,2-dioxaphosphorinane] 2,2'-dioxide plus 0.5 weight-% water as an additional blowing agent, the LOI is 22.3 and the time to flame extinguishment is 4.5 seconds on the FP-7 test.

## Claims

1. An expanded polymer composition having a density of from 1 to 30 lb/ft³ (16.480 kg/m³), comprising at least one styrenic polymer and from 2 to 6% by weight, based on the weight of the composition, of one or more aromatic polyphosphonate compounds represented by the structure: 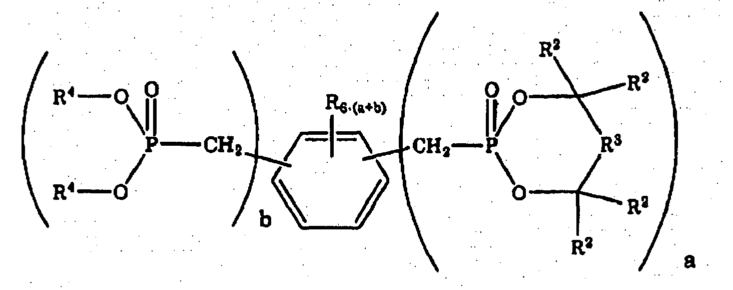 wherein a and b are each from 0 to 6, with a + b being from 2 to 6;
each R is independently hydrogen, unsubstituted alkyl having up to 6 carbon atoms, alkyl having up to 6 carbon atoms and substituted by an ether group, ester group, carbonyl group, hydroxyl group, carboxylic acid group, oxirane group, primary, secondary or tertiary amine group, imine group, amide group, nitro group, silane group or siloxane group, —NO₂, —NR¹₂ ,-C≡N, -OR¹, -C(O)OR¹, or -C(O)NR¹₂, wherein R¹ is hydrocarbyl or hydrogen;
each R² is independently hydrogen, alkyl or alkyl substituted by an ether group, ester group, carbonyl group, hydroxyl group, carboxylic acid group, oxirane group, primary, secondary or tertiary amine group, imine group, amide group, nitro group, silane group or siloxane group;
each R³ is a covalent bond or a divalent linking group; and
each R⁴ is independently an alkyl, aryl, alkyl substituted by an ether group, ester group, carbonyl group, hydroxyl group, carboxylic acid group, oxirane group, primary, secondary or tertiary amine group, imine group, amide group, nitro group, silane group or siloxane group or aryl group substituted by an ether group, ester group, carbonyl group, hydroxyl group, carboxylic acid group, oxirane group, primary, secondary or tertiary amine group, imine group, amide group, nitro group, silane group or siloxane group.

2. The expanded polymer composition of claim 1 wherein the aromatic polyphosphonate is represented by the structure: 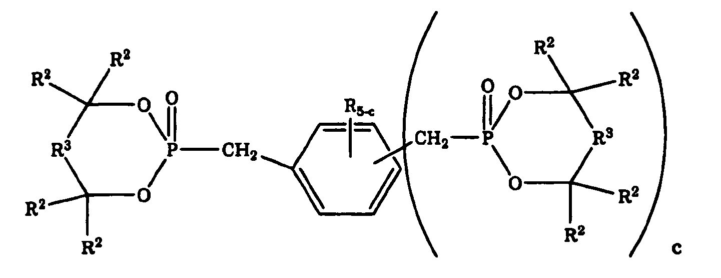 wherein c is 1 to 5,
each R is independently hydrogen, unsubstituted alkyl having up to 6 carbon atoms, alkyl having up to 6 carbon atoms and substituted by an ether group, ester group, carbonyl group, hydroxyl group, carboxylic acid group, oxirane group, primary, secondary or tertiary amine group, imine group, amide group, nitro group, silane group or siloxane group, -NO₂, -NR¹₂ ,-C≡N, -OR¹, -C(O)OR¹, or -C(O)NR¹₂ wherein R¹ is hydrocarbyl or hydrogen,
each R² is independently hydrogen, alkyl or alkyl substituted by an ether group, ester group, carbonyl group, hydroxyl group, carboxylic acid group, oxirane group, primary, secondary or tertiary amine group, imine group, amide group, nitro group, silane group or siloxane group, and
each R³ is a covalent bond or a divalent linking group.

3. The expanded polymer composition of claim 2, wherein each R is hydrogen or unsubstituted alkyl having up to 4 carbon atoms; each R² is hydrogen; each R³ is an alkylene diradical having no hydrogens on the carbon atom(s) bonded directly to the adjacent (R²)₂C groups, and c is from 1 to 3.

4. The expanded polymer composition of claim 3, wherein each R is hydrogen and each R³ is dimethylmethylene (propylidene).

5. The expanded polymer composition of any one of claims 1 to 4, wherein the styrenic polymer is a polystyrene homopolymer.

6. The expanded polymer composition of any one of claims 1 to 4, wherein the styrenic polymer is a copolymer of styrene and one or more comonomers.

7. A method for making an expanded styrenic polymer composition of any one of claims 1 to 6, comprising forming a pressurized, molten mixture of a melt-processable, styrenic polymer containing at least one blowing agent and from 2 to 6% by weight of the molten mixture of an aromatic polyphosphonate compound, and extruding the molten mixture through a die to a region of reduced pressure such that the molten mixture expands and the styrenic polymer cools to form an expanded polymer, wherein the aromatic polyphosphonate compound is represented by the structure: 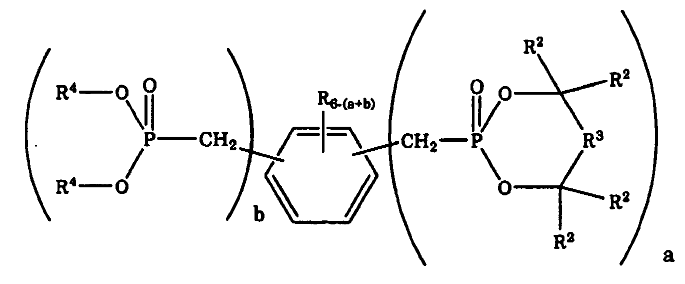 wherein a and b are each from 0 to 6, with a + b being from 2 to 6;
each R is independently hydrogen, unsubstituted alkyl having up to 6 carbon atoms, alkyl having up to 6 carbon atoms and substituted by an ether group, ester group, carbonyl group, hydroxyl group, carboxylic acid group, oxirane group, primary, secondary or tertiary amine group, imine group, amide group, nitro group, silane group or siloxane group, -NO₂, -NR¹₂ ,-C≡N, -OR¹, -C(O)OR¹, or -C(O)NR¹₂, wherein R¹ is hydrocarbyl or hydrogen;
each R² is independently hydrogen, alkyl or alkyl substituted by an ether group, ester group, carbonyl group, hydroxyl group, carboxylic acid group, oxirane group, primary, secondary or tertiary amine group, imine group, amide group, nitro group, silane group or siloxane group;
each R³ is a covalent bond or a divalent linking group; and
each R⁴ is independently an alkyl, aryl, alkyl substituted by an ether group, ester group, carbonyl group, hydroxyl group, carboxylic acid group, oxirane group, primary, secondary or tertiary amine group, imine group, amide group, nitro group, silane group or siloxane group or aryl group substituted by an ether group, ester group, carbonyl group, hydroxyl group, carboxylic acid group, oxirane group, primary, secondary or tertiary amine group, imine group, amide group, nitro group, silane group or siloxane group.

8. The method of claim 7, wherein the molten mixture is heated to a temperature of at least 200°C in the presence of the aromatic polyphosphonate prior to extruding the molten mixture through the die.

9. The method of claim 8, wherein the molten mixture is heated to a temperature of at least 220°C in the presence of the aromatic polyphosphonate prior to extruding the molten mixture through the die.

## Patentansprüche

1. Eine expandierte Polymerzusammensetzung mit einer Dichte von von 1 bis 30 lb/ft³ (16-480 kg/m³), beinhaltend mindestens ein styrenisches Polymer und von 2 bis 6 Gew.-%, basierend auf dem Gewicht der Zusammensetzung, einer oder mehrerer aromatischer Polyphosphonatverbindungen, die durch die folgende Struktur dargestellt sind: 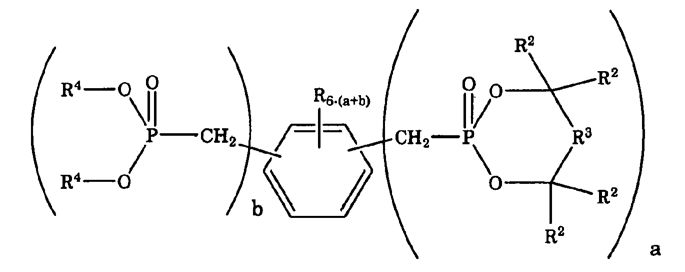 wobei a und b jeweils von 0 bis 6 sind, wobei a + b von 2 bis 6 ist;
jedes R unabhängig Wasserstoff, nicht substituiertes Alkyl mit bis zu 6 Kohlenstoffatomen, Alkyl mit bis zu 6 Kohlenstoffatomen und substituiert durch eine Ethergruppe, Estergruppe, Carbonylgruppe, Hydroxylgruppe, Carbonsäuregruppe, Oxirangruppe, primäre, sekundäre oder tertiäre Amingruppe, Imingruppe, Amidgruppe, Nitrogruppe, Silangruppe oder Siloxangruppe, -NO₂, -NR¹₂, -C≡N, -OR¹, -C(O)OR¹ oder -C(O)NR¹₂ ist, wobei R¹ ein Kohlenwasserstoffrest oder Wasserstoff ist;
jedes R² unabhängig Wasserstoff, Alkyl oder Alkyl, substituiert durch eine Ethergruppe, Estergruppe, Carbonylgruppe, Hydroxylgruppe, Carbonsäuregruppe, Oxirangruppe, primäre, sekundäre oder tertiäre Amingruppe, Imingruppe, Amidgruppe, Nitrogruppe, Silangruppe oder Siloxangruppe ist;
jedes R³ eine kovalente Bindung oder eine zweiwertige Verbindungsgruppe ist; und jedes R⁴ unabhängig ein Alkyl, Aryl, Alkyl, substituiert durch eine Ethergruppe, Estergruppe, Carbonylgruppe, Hydroxylgruppe, Carbonsäuregruppe, Oxirangruppe, primäre, sekundäre oder tertiäre Amingruppe, Imingruppe, Amidgruppe, Nitrogruppe, Silangruppe oder Siloxangruppe oder Arylgruppe, substituiert durch eine Ethergruppe, Estergruppe, Carbonylgruppe, Hydroxylgruppe, Carbonsäuregruppe, Oxirangruppe, primäre, sekundäre oder tertiäre Amingruppe, Imingruppe, Amidgruppe, Nitrogruppe, Silangruppe oder Siloxangruppe ist.

2. Expandierte Polymerzusammensetzung gemäß Anspruch 1, wobei das aromatische Polyphosphonat durch die folgende Struktur dargestellt ist: 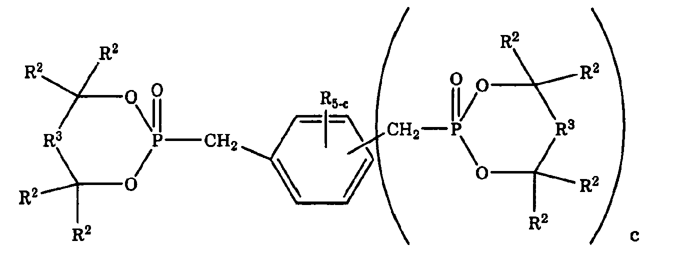 wobei c 1 bis 5 ist,
jedes R unabhängig Wasserstoff, nicht substituiertes Alkyl mit bis zu 6 Kohlenstoffatomen, Alkyl mit bis zu 6 Kohlenstoffatomen und substituiert durch eine Ethergruppe, Estergruppe, Carbonylgruppe, Hydroxylgruppe, Carbonsäuregruppe, Oxirangruppe, primäre, sekundäre oder tertiäre Amingruppe, Imingruppe, Amidgruppe, Nitrogruppe, Silangruppe oder Siloxangruppe, -NO₂, -NR¹₂, -C≡N, -OR¹, -C(O)OR¹ oder-C(O)NR¹₂ ist, wobei R¹ ein Kohlenwasserstoffrest oder Wasserstoff ist,
jedes R² unabhängig Wasserstoff, Alkyl oder Alkyl, substituiert durch eine Ethergruppe, Estergruppe, Carbonylgruppe, Hydroxylgruppe, Carbonsäuregruppe, Oxirangruppe, primäre, sekundäre oder tertiäre Amingruppe, Imingruppe, Amidgruppe, Nitrogruppe, Silangruppe oder Siloxangruppe ist, und
jedes R³ ist eine kovalente Bindung oder eine zweiwertige Verbindungsgruppe ist.

3. Expandierte Polymerzusammensetzung gemäß Anspruch 2, wobei jedes R Wasserstoff oder nicht substituiertes Alkyl mit bis zu 4 Kohlenstoffatomen ist; jedes R² Wasserstoff ist; jedes R³ ein Alkylen-Diradikal ist, das keinen Wasserstoff auf dem/den Kohlenstoffatom(en), das/die direkt mit den benachbarten (R²)₂C-Gruppen gebunden ist/sind, aufweist und c von 1 bis 3 ist.

4. Expandierte Polymerzusammensetzung gemäß Anspruch 3, wobei jedes R Wasserstoff ist und jedes R³ Dimethylmethylen (Propyliden) ist.

5. Expandierte Polymerzusammensetzung gemäß einem der Ansprüche 1 bis 4, wobei das styrenische Polymer ein Polystyren-Homopolymer ist.

6. Expandierte Polymerzusammensetzung gemäß einem der Ansprüche 1 bis 4, wobei das styrenische Polymer ein Copolymer aus Styren und einem oder mehreren Comonomeren ist.

7. Ein Verfahren zur Herstellung einer expandierten styrenischen Polymerzusammensetzung gemäß einem der Ansprüche 1 bis 6, beinhaltend das Bilden einer druckbeaufschlagten geschmolzenen Mischung aus einem schmelzverarbeitbaren styrenischen Polymer, die mindestens ein Treibmittel und von 2 bis 6 Gew.-% der geschmolzenen Mischung einer aromatischen Polyphosphonatverbindung enthält, und das Extrudieren der geschmolzenen Mischung durch eine Düse zu einem Bereich reduzierten Drucks, so dass die geschmolzene Mischung expandiert und sich das styrenische Polymer abkühlt, um ein expandiertes Polymer zu bilden, wobei die aromatische Polyphosphonatverbindung durch die folgende Struktur dargestellt ist: 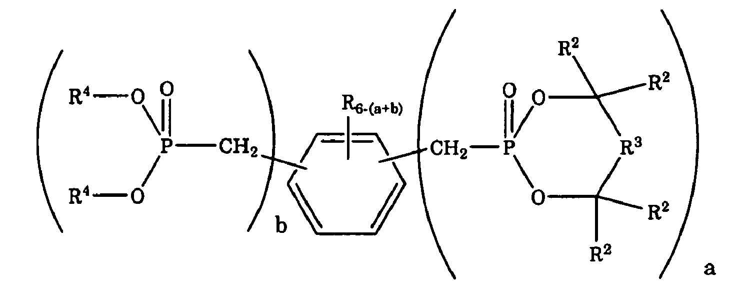 wobei a und b jeweils von 0 bis 6 sind, wobei a + b von 2 bis 6 ist;
jedes R unabhängig Wasserstoff, nicht substituiertes Alkyl mit bis zu 6 Kohlenstoffatomen, Alkyl mit bis zu 6 Kohlenstoffatomen und substituiert durch eine Ethergruppe, Estergruppe, Carbonylgruppe, Hydroxylgruppe, Carbonsäuregruppe, Oxirangruppe, primäre, sekundäre oder tertiäre Amingruppe, Imingruppe, Amidgruppe, Nitrogruppe, Silangruppe oder Siloxangruppe, -NO₂, -NR¹₂, -C≡N, -OR¹, -C(O)OR¹ oder -C(O)NR¹₂ ist, wobei R¹ ein Kohlenwasserstoffrest oder Wasserstoff ist;
jedes R² unabhängig Wasserstoff, Alkyl oder Alkyl, substituiert durch eine Ethergruppe, Estergruppe, Carbonylgruppe, Hydroxylgruppe, Carbonsäuregruppe, Oxirangruppe, primäre, sekundäre oder tertiäre Amingruppe, Imingruppe, Amidgruppe, Nitrogruppe, Silangruppe oder Siloxangruppe ist;
jedes R³ eine kovalente Bindung oder eine zweiwertige Verbindungsgruppe ist; und jedes R⁴ unabhängig ein Alkyl, Aryl, Alkyl, substituiert durch eine Ethergruppe, Estergruppe, Carbonylgruppe, Hydroxylgruppe, Carbonsäuregruppe, Oxirangruppe, primäre, sekundäre oder tertiäre Amingruppe, Imingruppe, Amidgruppe, Nitrogruppe, Silangruppe oder Siloxangruppe oder Arylgruppe, substituiert durch eine Ethergruppe, Estergruppe, Carbonylgruppe, Hydroxylgruppe, Carbonsäuregruppe, Oxirangruppe, primäre, sekundäre oder tertiäre Amingruppe, Imingruppe, Amidgruppe, Nitrogruppe, Silangruppe oder Siloxangruppe ist.

8. Verfahren gemäß Anspruch 7, wobei die geschmolzene Mischung in Gegenwart des aromatischen Polyphosphonats vor dem Extrudieren der geschmolzenen Mischung durch die Düse auf eine Temperatur von mindestens 200 °C erhitzt wird.

9. Verfahren gemäß Anspruch 8, wobei die geschmolzene Mischung in Gegenwart des aromatischen Polyphosphonats vor dem Extrudieren der geschmolzenen Mischung durch die Düse auf eine Temperatur von mindestens 220 °C erhitzt wird.

## Revendications

1. Une composition de polymère expansé ayant une masse volumique allant de 1 à 30 livres/pieds cube (16 à 480 kg/m³), comprenant au moins un polymère styrénique et de 2 à 6 % en poids, rapporté au poids de la composition, d'un ou de plusieurs composés polyphosphonates aromatiques représentés par la structure : 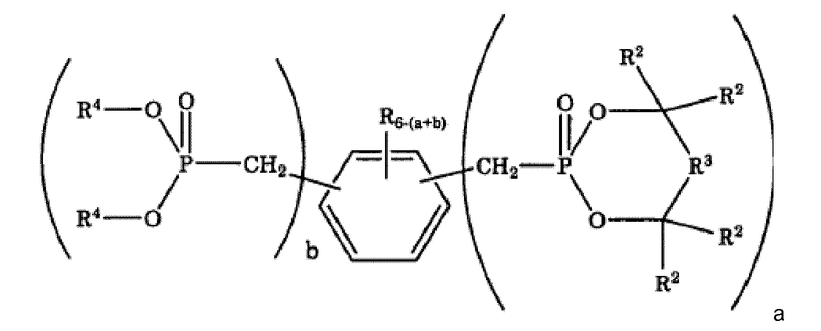 dans laquelle a et b font chacun de 0 à 6, a+b faisant de 2 à 6 ;
chaque R est indépendamment l'hydrogène, un alkyle non substitué ayant jusqu'à 6 atomes de carbone, un alkyle ayant jusqu'à 6 atomes de carbone et substitué par un groupe éther, un groupe ester, un groupe carbonyle, un groupe hydroxyle, un groupe acide carboxylique, un groupe oxirane, un groupe amine primaire, secondaire ou tertiaire, un groupe imine, un groupe amide, un groupe nitro, un groupe silane ou un groupe siloxane, -NO₂, -NR¹₂ ,-C≡N, -OR¹, -C(O)OR¹, ou -C(O)NR¹₂, où R¹ est un hydrocarbyle ou l'hydrogène ;
chaque R² est indépendamment l'hydrogène, un alkyle ou un alkyle substitué par un groupe éther, un groupe ester, un groupe carbonyle, un groupe hydroxyle, un groupe acide carboxylique, un groupe oxirane, un groupe amine primaire, secondaire ou tertiaire, un groupe imine, un groupe amide, un groupe nitro, un groupe silane ou un groupe siloxane ;
chaque R³ est une liaison covalente ou un groupe de liaison divalent ; et chaque R⁴ est indépendamment un alkyle, un aryle, un alkyle substitué par un groupe éther, un groupe ester, un groupe carbonyle, un groupe hydroxyle, un groupe acide carboxylique, un groupe oxirane, un groupe amine primaire, secondaire ou tertiaire, un groupe imine, un groupe amide, un groupe nitro, un groupe silane ou un groupe siloxane ou un groupe aryle substitué par un groupe éther, un groupe ester, un groupe carbonyle, un groupe hydroxyle, un groupe acide carboxylique, un groupe oxirane, un groupe amine primaire, secondaire ou tertiaire, un groupe imine, un groupe amide, un groupe nitro, un groupe silane ou un groupe siloxane.

2. La composition de polymère expansé de la revendication 1 dans laquelle le polyphosphonate aromatique est représenté par la structure : 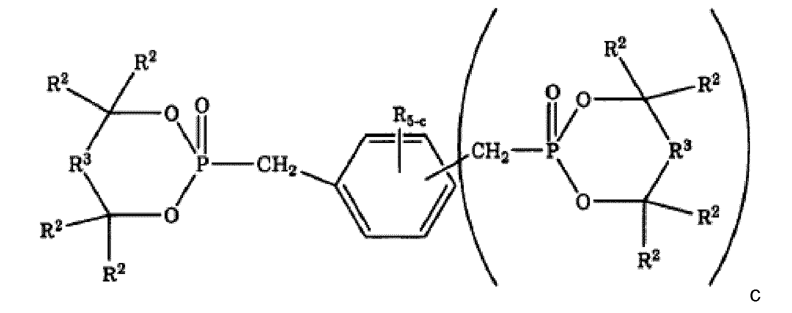 dans laquelle c fait de 1 à 5,
chaque R est indépendamment l'hydrogène, un alkyle non substitué ayant jusqu'à 6 atomes de carbone, un alkyle ayant jusqu'à 6 atomes de carbone et substitué par un groupe éther, un groupe ester, un groupe carbonyle, un groupe hydroxyle, un groupe acide carboxylique, un groupe oxirane, un groupe amine primaire, secondaire ou tertiaire, un groupe imine, un groupe amide, un groupe nitro, un groupe silane ou un groupe siloxane, -NO₂, -NR¹₂ ,-C≡N, -OR¹, -C(O)OR¹, ou -C(O)NR¹₂, où R¹ est un hydrocarbyle ou l'hydrogène,
chaque R² est indépendamment l'hydrogène, un alkyle ou un alkyle substitué par un groupe éther, un groupe ester, un groupe carbonyle, un groupe hydroxyle, un groupe acide carboxylique, un groupe oxirane, un groupe amine primaire, secondaire ou tertiaire, un groupe imine, un groupe amide, un groupe nitro, un groupe silane ou un groupe siloxane, et
chaque R³ est une liaison covalente ou un groupe de liaison divalent.

3. La composition de polymère expansé de la revendication 2, dans laquelle chaque R est l'hydrogène ou un alkyle non substitué ayant jusqu'à 4 atomes de carbone ; chaque R² est l'hydrogène ; chaque R³ est un diradical alkylène n'ayant aucun hydrogène sur le ou les atomes de carbone liés directement aux groupes (R²)₂C adjacents, et c fait de 1 à 3.

4. La composition de polymère expansé de la revendication 3, dans laquelle chaque R est l'hydrogène et chaque R³ est le diméthylméthylène (propylidène).

5. La composition de polymère expansé de l'une quelconque des revendications 1 à 4, dans laquelle le polymère styrénique est un homopolymère de polystyrène.

6. La composition de polymère expansé de l'une quelconque des revendications 1 à 4, dans laquelle le polymère styrénique est un copolymère de styrène et un ou plusieurs comonomères.

7. Un procédé pour réaliser une composition de polymère styrénique expansé de l'une quelconque des revendications 1 à 6, comprenant former un mélange fondu sous pression d'un polymère styrénique transformable à l'état fondu contenant au moins un agent gonflant et de 2 à 6 % en poids du mélange fondu d'un composé polyphosphonate aromatique, et extruder le mélange fondu à travers une filière jusqu'à une région de pression réduite de façon à provoquer l'expansion du mélange fondu et le refroidissement du polymère styrénique pour former un polymère expansé, dans lequel le composé polyphosphonate aromatique est représenté par la structure : 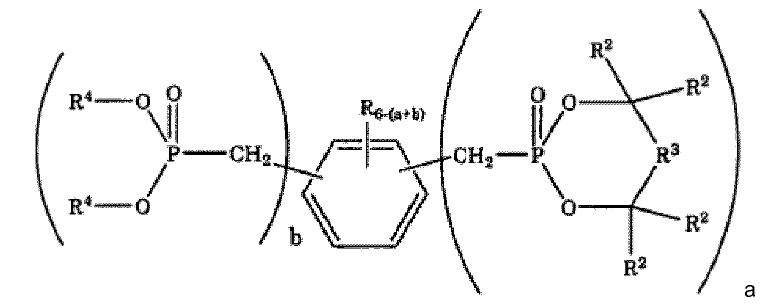 dans laquelle a et b font chacun de 0 à 6, a+b faisant de 2 à 6 ;
chaque R est indépendamment l'hydrogène, un alkyle non substitué ayant jusqu'à 6 atomes de carbone, un alkyle ayant jusqu'à 6 atomes de carbone et substitué par un groupe éther, un groupe ester, un groupe carbonyle, un groupe hydroxyle, un groupe acide carboxylique, un groupe oxirane, un groupe amine primaire, secondaire ou tertiaire, un groupe imine, un groupe amide, un groupe nitro, un groupe silane ou un groupe siloxane, -NO₂, -NR¹₂,-C≡N, -OR¹, -C(O)OR¹, ou -C(O)NR¹₂, où R¹ est un hydrocarbyle ou l'hydrogène ;
chaque R² est indépendamment l'hydrogène, un alkyle ou un alkyle substitué par un groupe éther, un groupe ester, un groupe carbonyle, un groupe hydroxyle, un groupe acide carboxylique, un groupe oxirane, un groupe amine primaire, secondaire ou tertiaire, un groupe imine, un groupe amide, un groupe nitro, un groupe silane ou un groupe siloxane ;
chaque R³ est une liaison covalente ou un groupe de liaison divalent ; et
chaque R⁴ est indépendamment un alkyle, un aryle, un alkyle substitué par un groupe éther, un groupe ester, un groupe carbonyle, un groupe hydroxyle, un groupe acide carboxylique, un groupe oxirane, un groupe amine primaire, secondaire ou tertiaire, un groupe imine, un groupe amide, un groupe nitro, un groupe silane ou un groupe siloxane ou un groupe aryle substitué par un groupe éther, un groupe ester, un groupe carbonyle, un groupe hydroxyle, un groupe acide carboxylique, un groupe oxirane, un groupe amine primaire, secondaire ou tertiaire, un groupe imine, un groupe amide, un groupe nitro, un groupe silane ou un groupe siloxane.

8. Le procédé de la revendication 7, dans lequel le mélange fondu est chauffé à une température d'au moins 200 °C en présence du polyphosphonate aromatique préalablement à l'extrusion du mélange fondu à travers la filière.

9. Le procédé de la revendication 8, dans lequel le mélange fondu est chauffé à une température d'au moins 220 °C en présence du polyphosphonate aromatique préalablement à l'extrusion du mélange fondu à travers la filière.
